# DEMANDE DE BREVET EUROPEEN

(11) **EP 2 884 415 A1**
(43) Date de publication de la demande: **17.06.2015**
(21) Numéro de dépôt: 14194806.7
(22) Date de dépôt: 25.11.2014
(51) Int. Cl.: G06F 21/00, G06Q 20/34, G06Q 20/40, G06Q 40/02

(54) **Méthode de traitement de données transactionnelles, terminal, serveur et programmes d'ordinateur correspondants**

(30) Priorité: 05.12.2013 FR 1362191
(71) Demandeur: COMPAGNIE INDUSTRIELLE ET FINANCIERE D'INGENIERIE (INGENICO), 75015 Paris (FR)
(72) Inventeur: Polechtchouk, Pavel, Mosman, New South Wales NSW 2088 (AU); Naccache, David, 75018 Paris (FR)
(74) Mandataire: Vidon Brevets & Stratégie

(57) **Abrégé**

L'invention se rapporte à un système (SystT) de traitement de données de cartes bancaires de surveillance.

Selon l'invention, un tel système comprend :
- un module d'introduction (MI), au sein d'une plateforme de paiement par carte bancaires (PFP), de données de carte bancaires de surveillance, ledit module sauvegardant, dans une base de données (BDD), dite de suivi, les données de cartes bancaires insérées dans ladite plateforme de paiement par carte bancaires (PFP) ;
- un module de surveillance (MS) d'activité des données de carte bancaires de surveillance introduites précédemment au sein de ladite plateforme de paiement par carte bancaires (PFP), ledit module sauvegardant, dans ladite base de données (BDD) de suivi, au moins un enregistrement de suivi d'utilisation des données de cartes bancaires.

## Description

### 1. Domaine de l'invention

L'invention se rapporte au domaine des dispositifs de paiement. Plus particulièrement, l'invention se rapporte à un procédé et à un système de surveillance d'utilisation de dispositifs de paiement.

### 2. Art Antérieur

Cette dernière décennie, le commerce électronique a connu un essor important. Il soutient fortement la croissance de plusieurs pays industrialisés. Pour régler par l'intermédiaire de ces sites, les clients utilisent majoritairement des cartes de crédit. Bien que les utilisateurs soient de mieux en mieux informés quant à la sécurité des sites de commerces électroniques, notamment au moment du paiement, le montant annuel des fraudes à la carte bancaire est en constante augmentation. Parmi ces fraudes à la carte bancaire, les fraudes électroniques représentent plus des trois quart du montant total.

Il est en effet devenu fréquent de lire dans la presse que des bases de données contenant des numéros de cartes de crédit ont été volés et que des millions de numéros de cartes de crédit sont donc exposés à des utilisations frauduleuses. Il existe par ailleurs des sites internet qui sont utilisés comme des sorte de bourse d'achat et de vente de numéros volés de cartes de crédits.

Actuellement il existe des solutions techniques pour combattre ces vols de données. Ce solutions sont généralement basées sur du chiffrement des données de carte bancaires sur des serveurs et sur des contrôles d'accès à ces données de carte bancaires. Ces solutions sont différentes de celles qui consistent à chiffrer la transaction au moment du paiement. En effet, bien que de très nombreux sites mettent en oeuvre des solutions de chiffrement au moment de la transaction, le nombre de sites qui protègent les données stockées postérieurement à la transaction est relativement faible.

En effet, ces solutions sont onéreuses et découragent certains sites marchands.

Ainsi, à l'heure actuelle, une personne qui découvre que son numéro de carte de crédit a été usurpé peut porter plainte et demander le remplacement de sa carte auprès de l'émetteur de celle-ci. En revanche, aucune solution au problème d'origine n'est apportée. Ainsi, l'émetteur n'est pas en mesure de savoir quand et où les données de carte bancaire ont été usurpées. Il existe bien des solutions de suivi d'utilisation de cartes bancaires. Ce solutions sont généralement destinées aux établissements de crédit ou aux prestataires de services de paiement. Elles fonctionnent sur la base des autorisations bancaires qui sont requises auprès de l'établissement pour valider une transaction donnée. Plus particulièrement, lorsqu'une transaction excède un montant prédéterminé, une autorisation est requise auprès de l'établissement de crédit afin de poursuivre ou non la transaction il est donc possible de détecter l'utilisation des données de carte en cas de dépassement du montant prédéterminé. Cette solution est cependant limitée car elle ne permet pas de détecter les transactions dont le montant est inférieur au montant d'autorisation. Cette solution n'offre par ailleurs pas de possibilité de détecter une origine de fraude.

Il existe donc un besoin de fournir une solution à ce problème afin de donner les moyens aux émetteurs de cartes bancaires de tracer l'origine des vols de données de carte bancaires et combattre les réseaux de distribution de telles données.

### 3. Résumé de l'invention

La technique proposée résout au moins en partie ces problèmes. Plus particulièrement, la technique proposée se rapporte à un système de traitement de données de cartes bancaires de surveillance. Un tel système comprend :
- un module d'introduction, au sein d'une plateforme de paiement par carte bancaires, de données de carte bancaires de surveillance, ledit module sauvegardant, dans une base de données, dite de suivi, les données de cartes bancaires insérées dans ladite plateforme de paiement par carte bancaires ;
- un module de surveillance d'activité des données de carte bancaires de surveillance introduites précédemment au sein de ladite plateforme de paiement par carte bancaires, ledit module sauvegardant, dans ladite base de données de suivi, au moins un enregistrement de suivi d'utilisation des données de cartes bancaires et délivrant des données de détection d'une utilisation frauduleuse desdites données de carte bancaire de surveillance..

Selon un mode de réalisation particulier, le module d'introduction prend en entrée une liste de données de carte bancaires de surveillance à insérer, cette liste comprenant des enregistrements de données de cartes bancaires de surveillance, chaque enregistrement comprenant au moins un numéro de carte bancaire et une date d'expiration sous la forme année mois.

Selon une caractéristique particulière, chaque enregistrement comprend en outre un plafond de montant de transaction unitaire et un plafond global.

Selon une caractéristique particulière, ledit module d'introduction comprend des moyens de connexion, par l'intermédiaire d'une interface de connexion préalablement définie, à une base de données de cartes bancaires de ladite plateforme de paiement par carte bancaires.

Selon un mode de réalisation particulier, ledit module de surveillance comprend des moyens de connexion, par l'intermédiaire d'une interface de connexion préalablement définie, à au moins un serveur de transaction d'un fournisseur de service de paiement, et des moyens de contrôle d'utilisation de données bancaires, par l'intermédiaire de données obtenues à l'aide de ces moyens de connexion.

Selon une caractéristique particulière lesdits moyens de contrôle comprennent :
- des moyens de comparaison, avec lesdites données obtenues par l'intermédiaire dudit au moins un serveur de transaction d'un fournisseur de service de paiement, d'un numéro de carte bancaire de ladite base de données de suivi ; et
- des moyens de vérification d'une autorisation de paiement lorsque les moyens de comparaison fournissent un numéro enregistré dans ladite base de données de suivi.

Selon une caractéristique particulière, lesdits moyens de vérification comprennent en outre des moyens d'obtention d'au moins une donnée complémentaire associée à l'utilisation desdites données bancaires.

Selon un mode de réalisation particulier, ladite donnée complémentaire appartient au groupe comprenant :
- une adresse IP d'émission d'une transaction relative auxdites données bancaires ;
- une adresse physique correspondant à un lieu d'utilisation desdites données bancaires.

La technique décrite se rapporte également à un procédé de traitement de données de cartes bancaires de surveillance dans un système tel que décrit préalablement. Une telle méthode comprend :
- une étape d'introduction, au sein d'une plateforme de paiement par carte bancaires, de données de carte bancaires de surveillance, comprenant la sauvegarde, dans une base de données, dite de suivi, les données de cartes bancaires insérées dans ladite plateforme de paiement par carte bancaires ;
- au moins une étape de suivi d'activité des données de carte bancaires de surveillance introduites précédemment au sein de ladite plateforme de paiement par carte bancaires, comprenant la sauvegarde, dans ladite base de données de suivi, au moins un enregistrement de suivi d'utilisation des données de cartes bancaires.

Selon une implémentation préférée, les différentes étapes des procédés et les modules du système sont mises en oeuvre par un ou plusieurs logiciels ou programmes d'ordinateur, comprenant des instructions logicielles destinées à être exécutées par un processeur de données d'un module relais selon l'invention et étant conçu pour commander l'exécution des différentes étapes des procédés.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres modules logiciels.

Les différents modes de réalisation mentionnés ci-dessus sont combinables entre eux pour la mise en oeuvre de l'invention.

### 4. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique de la technique proposée ;
- la figure 2 décrit les différentes phases de mise en oeuvre la technique proposée ;
- la figure 3 décrit une architecture pour la mise en oeuvre de la technique proposée.

### 5. Description

### 5.1. Rappel du principe général de l'invention

Comme exposé précédemment, la technique proposée se base sur une création et une injection, dans le circuit de traitement, de données de carte bancaires de surveillance spécifiquement forgées pour être utilisées à des fins de traçage. Plus particulièrement, la technique proposée repose sur le suivi de transactions réalisées à l'aide desdites données de cartes bancaires.

La technique proposée fournit les moyens pour un émetteur carte de paiement de surveiller activement les sites d'e-commerce et de détecter si un vol, une violation de règles de sécurité ou tout autre comportement frauduleux s'est produit.

Par ailleurs, cette surveillance peut être réalisée sans intervention auprès des administrateurs des sites ou plateformes de services qui sont surveillés. La technique proposée peut également être utilisée pour vérifier et infiltrer des sites frauduleux. Plus particulièrement, la technique proposée peut être utilisée pour tracer les localisations d'opérations frauduleuses au moment où ces opérations se produisent.

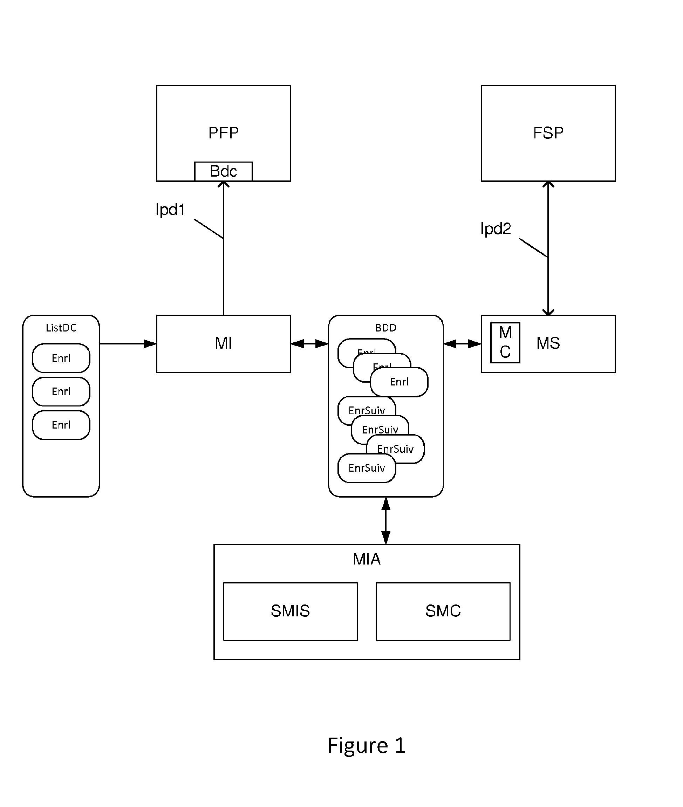

Pour se faire, la technique proposée, décrite en relation avec la figure 1, se présente sous la forme d'un système (SystT) de traitement de données de cartes bancaires de surveillance. Un tel système comprend d'une part un module d'introduction de données de carte bancaires de surveillance (MI). Ce module (MI) est en charge de l'insertion de données de cartes bancaires de surveillance dans diverses plateformes de paiement par carte bancaires (PFP) (comme des sites web marchants). Il prend en entrée une liste de données de carte bancaires de surveillance à insérer (ListDC). Cette liste (ListDC) comprend des enregistrements de données de cartes bancaires de surveillance. Chaque enregistrement (Enrl) comprend au moins un numéro de carte bancaire (par exemple un numéro à 16 chiffres) et une date d'expiration sous la forme année mois (AA/MM). Pour des techniques de suivis plus précises, l'enregistrement peut également comprendre un plafond de montant de transaction unitaire et un plafond global pour ces données de carte bancaire.

Les données de cartes bancaires de la liste (ListDC) qui sont insérées dans un site web sont sauvegardées, dans une base de données de suivi (BDD). Un tel système comprend également un module de surveillance (MS). Ce module permet de suivre l'activité des données de carte bancaires de surveillance introduites précédemment. Il est interfacé avec la base de données de suivi (BDD) comprenant les données bancaires insérées par le module d'introduction. Il est en charge de l'acceptation ou du refus de l'utilisation des données bancaires. Il est également en charge de l'enregistrement, au sein de listes ou de tables de cette base de données (BDD), des utilisations successives des données de carte bancaires, sous la forme d'enregistrements de suivi (EnrSuiv). Un enregistrement de suivi (EnrSuiv) comprend par exemple une date d'utilisation de la carte, un identifiant de commerce ou de site web ou les données ont été utilisées, un montant de transaction, une adresse IP de du site web où les données ont été utilisées et/ou une adresse physique d'un commerce ou les données ont été utilisées. Le module de surveillance (MS) est interfacé, par l'intermédiaire d'une interface préalablement définit (Ipd2) avec au moins un serveur d'un fournisseur de services de paiement FSP (serveur de transaction bancaire par exemple) pour recevoir, de la part de celui-ci, des données concernant les transactions utilisant des cartes bancaires. Selon une première possibilité, le module de surveillance MS est en coupure du serveur FSP et il « voit » l'ensemble des transactions utilisant des données de carte bancaire. Selon un deuxième mode de réalisation, le module de surveillance ne reçoit que les transactions relatives aux données de carte insérées dans les plateformes de paiement par carte bancaires (PFP). Cette deuxième possibilité est plus simple à mettre en oeuvre. Elle nécessite cependant de communiquer la liste des données insérées au serveur FSP. Dans un mode de réalisation particulier, le module de surveillance MS est directement intégré au sein du serveur FSP. Le module de surveillance (MS) comprend un module de contrôle (MC) d'utilisation des données bancaires. Ce module de contrôle (MC) comprend :
- des moyens de comparaison, avec les données obtenues par l'intermédiaire du serveur de transaction FSP, des numéros de carte bancaire de la base de données de suivi (BDD) ; et
- des moyens de vérification d'une autorisation de paiement lorsque les moyens de comparaison fournissent un numéro enregistré dans la base de données de suivi.

Le système comprend en outre un module d'analyse (MIA). Ce module d'analyse comprend un sous module d'identification des sites de commerce dans lesquels des vols de données ont été recensés (SMIS) et un sous module de corrélation (SMC). Ce sous module de corrélation combine les utilisations de différentes données de cartes bancaires qui sont répertoriées dans les enregistrements de suivi afin de déterminer une origine d'utilisation ou un schéma d'utilisation ou de vol.

### 5.2. Description d'un mode de réalisation

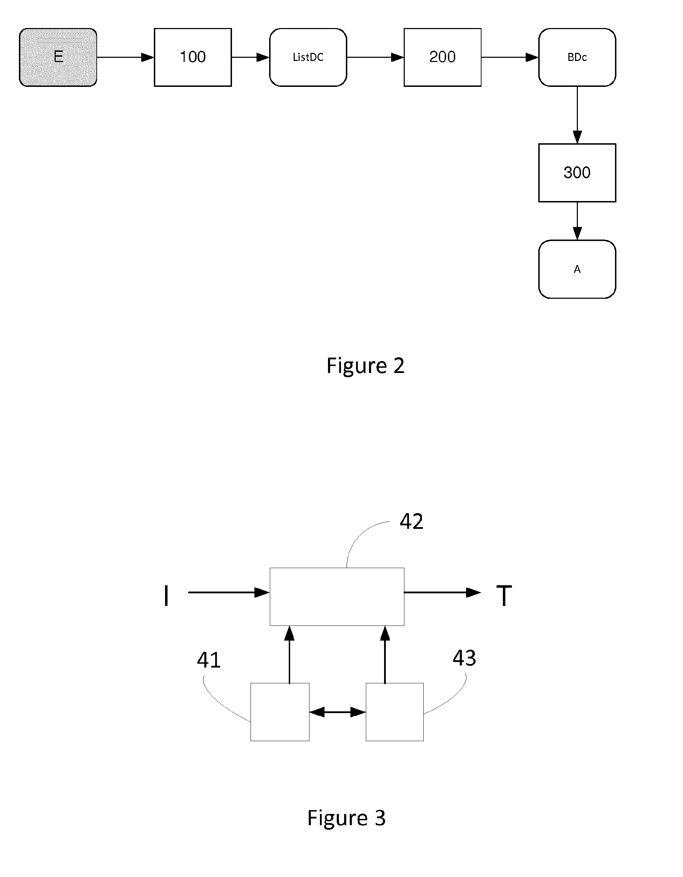

Dans ce mode de réalisation, décrit en relation avec la figure 2, la technique proposée est matérialisée par la création d'un ensemble de données de cartes bancaires de surveillance réelles et utilisables, disponibles dans la liste ListDC.

L'émetteur génère (100) un ensemble de données relatives à des cartes de crédit. L'émetteur veille à ce que ces numéros de cartes soient aléatoires, de sorte qu'ils ne peuvent pas être distingués comme étant une partie d'un ensemble de données bancaires de surveillance. Ces numéros de carte sont réels, mais ils sont associés à des comptes bancaires spécifiques utilisés pour la surveillance et à un système (SystT) de traitement de données de cartes bancaires de surveillance tel que décrit préalablement.

Ces données de cartes sont ensuite injectées 200 dans des bases de données (BDc) e-commerce (comme des sites web commerçant), par le module d'insertion. Cela peut être réalisé par l'une des deux méthodes suivantes, détaillant deux interfaces prédéfinies différentes pour l'insertion des données :
- un émetteur peut injecter les numéros de cartes dans un site de commerce électronique et surveiller ce site, avec ou sans la connaissance par ce site, qu'il fait l'objet d'une surveillance (insertion par le biais d'achat de biens ou de prestations de services) ;
- un émetteur peut fournir un service à un site e-commerce en leur fournissant des numéros de carte qui peut être utilisé pour la surveillance (insertion sans achat de biens ou de prestations de services) ; le site surveillé coopère à la surveillance.

Dans le premier cas, les cartes sont utilisées pour faire des achats dans les magasins en ligne qui sont surveillés. Ceci est fait en utilisant les API ou interfaces web des sites qui sont surveillés.

Dans le second cas, un site commerçant reçoit une liste de données de carte de paiement à insérer, et cette liste est injectée dans la base de données du site e-commerce lui-même.

Une alerte (A) est créée (300) dans le système d'émetteur, par l'intermédiaire du module de surveillance (MS). Cette alerte est déclenchée par toute utilisation ultérieure de ces données de cartes. Si une alerte est déclenchée, des mesures peuvent être prises pour d'une part identifier une brèche sur le site de commerce électronique et d'autre part prévenir les autorités compétentes. Le site e-commerce concerné peut alors être notifié, et l'enquête peut alors être réalisée sur la façon dont la violation a eu lieu.

### 5.3. Description d'un deuxième mode de réalisation

Dans ce mode de réalisation, la technique proposée est matérialisée par la création d'un ensemble de données de cartes bancaires de surveillance fictives. Dans ce mode de réalisation, les numéros générés ne permettent pas de réaliser des transactions; ces numéros sont ainsi rejetés par l'établissement de crédit ou par l'organisme émetteur, selon l'architecture de validation de transaction employée.

L'avantage de ce mode de réalisation est de pouvoir détecter la « tentative » d'utilisation sans avoir besoin de mettre à disposition des fonds (bien réels) consacrés au repérage de la fraude.

Pour permettre l'injection de ces numéros fictifs dans le système d'information d'un site de commerce en ligne, deux méthodes différentes peuvent être utilisées. La première méthode consiste à insérer directement ces données dans la base de données du site de commerce en ligne. Ceci nécessite cependant que les administrateurs et les gestionnaires de ce site de commerce en ligne coopèrent pour réaliser cette insertion ; d'une part il n'est pas assuré que les administrateurs et les gestionnaires soient d'accord, d'autre cela oblige à fournir ces données à des tiers (les administrateurs et les gestionnaires) qui peuvent être impliqué dans le vol de ces données.

Une autre méthode, plus discrète, consiste à requérir le concours de l'établissement de crédit auprès duquel les données de cartes bancaires sont enregistrées. En effet, parmi les données d'une carte bancaire, un « code banque » est systématiquement présent. Ce code banque désigne l'établissement de crédit (ou de paiement) titulaire de la carte. L'astuce consiste à informer l'établissement en question que des données de cartes fictives sont associées à l'établissement et à requérir, auprès de celui-ci, des autorisations temporaires pour ces données fictives. Ainsi, les données fictives peuvent être injectées dans le système, par le biais de commandes de biens et services. Pour éviter de dépenser des sommes trop importantes auprès des commerçants audités, les commandes de biens et de services peuvent être systématiquement annulées postérieurement à la commande : ainsi, les données sont présentes dans le système, sans qu'il ait été besoin de dépenser de l'argent.

### 5.4. Description d'un cas d'usage

Dans ce cas d'usage, un système robotisé, auquel on confie des données de carte bancaires de surveillance d'une part et des sites de commerce électronique d'autre part, effectue une distribution des données de carte bancaires de surveillance auprès de ces sites de commerce électronique. Dans ce cas d'usage, les données de carte bancaires sont distribuées linéairement entre les sites à surveiller (il n'y a pas de mise en oeuvre probabiliste). Le système utilise des actions préprogrammées pour rechercher, sur chaque site à surveiller, un ou plusieurs articles, d'une valeur inférieure à un montant prédéterminé. Ceci est fait en préprogrammant un certain nombre d'actions dans un automate de manipulation d'interfaces homme-machine. Bien entendu, cela peut aussi être fait à la main, par un opérateur de saisie. La caractéristique principale de cette distribution étant qu'un numéro de carte bancaire donné n'est utilisé qu'une seule fois pour un site web donné.

Le système robotisé (ou l'opérateur de saisie), insère, dans une base de données de suivi, les données bancaires, la date à laquelle elles ont été utilisées, le site web sur lequel elles ont été utilisées et les fournitures achetées. Les données bancaires insérées sont ensuite supprimées de la liste des données bancaires disponibles pour l'insertion.

De manière continue, en lien ou non avec un fichier de paiement des établissements bancaires, le système identifie les données bancaires qui sont utilisées frauduleusement parmi les données bancaires de la base de données de suivi. Lorsqu'un achat est repéré avec des données bancaires issues de la base de données de suivi, le système crée une liste des opérations réalisées avec ces données de carte bancaires. Les opérations sont identifiées par leur date et heure, le nom du commerce auprès duquel les opérations sont faites (commerce physique, commerce en ligne). Les données qui sont également sauvegardées sont le montant de la transaction, la référence de la transaction au niveau du commerce et le pays du commerce (lorsque cette donnée est accessible). Lorsque cette donnée n'est pas accessible, une étape supplémentaire consistant à rechercher, dans une ou plusieurs bases de données, le nom de domaine associé au commerçant chez qui la fraude a été commise, pour identifier le propriétaire du nom de domaine associé au commerçant et y associer un pays. Lorsque les données bancaires ne sont pas utilisées chez un commerçant en ligne, l'étape supplémentaire de recherche est réalisée parmi des noms de sociétés commerciales.

Dans ce cas d'utilisation, lorsqu'un numéro de la liste des numéros surveillés est utilisé :
- soit les données de carte bancaire sont invalidées, et ne seront donc plus utilisables ;
- soit les données de la carte bancaire ne sont pas invalidées : les données entrent en surveillance renforcées, avec demande systématique d'autorisation avant paiement. Une surveillance d'utilisation est entamée. La liste des opérations affectées à ces données est complétée.

Ainsi, dans la deuxième hypothèse, lorsqu'une demande d'autorisation avant paiement est requise, le système :
- reçoit la demande d'autorisation ;
- lorsque cela est possible, requiert des données complémentaires sur le dispositif utilisé pour effectuer la transaction (adresse IP par exemple) ;
- vérifie que le montant de la transaction n'excède pas un plafond de surveillance prédéterminé (ce plafond est différent du plafond usuel carte bancaire, il s'agit d'un plafond spécifique à la présente technique, qui est inférieur au plafond « carte » et permet à l'organisme ne de pas « perdre » trop d'argent avec le système en question ;
- lorsque le montant excède ce plafond de surveillance, le système refuse la transaction, mais enregistre les données transactionnelles reçues ; la transaction est marquée refusée dans la liste des transactions ;
- lorsque le montant n'excède pas ce plafond, le système accepte le paiement et enregistre les données transactionnelles reçues.

De manière complémentaire, lorsqu'un encours global d'une carte sous surveillance est atteint, les données de la carte sont invalidées.

De manière continue, le système réalise en sus une analyse des données de suivi. Cette analyse a pour objectif d'une part d'identifier le ou les sites de commerce en ligne ayant fait l'objet d'un vol de données bancaire. Grâce à la technique de l'invention, ceci est simple puisqu'il s'agit de vérifier le nombre d'opération réalisées dans chaque liste de suivi associée aux données bancaires puis de d'identifier le site web ou ces données ont été utilisées. Le site web en question peut être averti dès que la deuxième utilisation est repérée de façon à ce qu'il prenne des mesures de sécurisation le plus rapidement possible.

Lorsque les données de cartes ne sont pas immédiatement invalidées postérieurement à leur deuxième utilisation, le système met en oeuvre un module d'analyse, dans lequel les transactions sont horodatées et dans la mesure du possible localisées (grâce notamment à l'adresse IP de l'émetteur de la transaction). Ce module délivre une cartographie d'utilisation des données des cartes bancaires.

### 5.5. Autres caractéristiques et avantages

On présente, en relation avec la figure 3, une architecture simplifiée d'un système de traitement de données de cartes bancaires de surveillance apte à mettre en oeuvre la technique décrite. Un tel terminal comprend une mémoire 41, une unité de traitement 42 équipée par exemple d'un microprocesseur, et pilotée par le programme d'ordinateur 43, mettant en oeuvre au moins une partie du procédé tel que décrit. Dans au moins un mode de réalisation, la technique décrite est mise en oeuvre sous la forme d'une application logicielle. Dans un autre mode de réalisation, la technique décrite est mise en oeuvre sous une forme purement matérielle, à l'aide de processeurs et d'interface spécialement créés à cet effet. Un tel système comprend :
- des moyens d'introduction, au sein d'une plateforme de paiement par carte bancaires, de données de carte bancaires de surveillance, ledit module sauvegardant, dans une base de données, dite de suivi, les données de cartes bancaires insérées dans ladite plateforme de paiement par carte bancaires ;
- un module de surveillance d'activité des données de carte bancaires de surveillance introduites précédemment au sein de ladite plateforme de paiement par carte bancaires, ledit module sauvegardant, dans ladite base de données de suivi, au moins un enregistrement de suivi d'utilisation des données de cartes bancaires.

Ces moyens sont pilotés par le microprocesseur, à l'aide du programme chargés dans la mémoire du terminal. En fonction des modes de réalisation, le système comprend également d'autres moyens permettant de réaliser des échanges avec un ou plusieurs serveurs bancaires, comme des moyens de mise en opposition des données de carte bancaires.

## Revendications

1. Système (SystT) de traitement de données de cartes bancaires de surveillance, **caractérisé en ce qu'**il comprend :
- un module d'introduction (MI), au sein d'une plateforme de paiement par carte bancaires (PFP), par le biais d'achat de biens ou de prestation de services sur un site e-commerce, de données de carte bancaires de surveillance, ledit module sauvegardant, dans une base de données (BDD), dite de suivi, les données de cartes bancaires de surveillance insérées dans ladite plateforme de paiement par carte bancaires (PFP) ;
- un module de surveillance (MS) d'activité des données de carte bancaires de surveillance introduites précédemment au sein de ladite plateforme de paiement par carte bancaires (PFP), ledit module sauvegardant, dans ladite base de données (BDD) de suivi, au moins un enregistrement de suivi d'utilisation des données de cartes bancaires de surveillance et délivrant des données de détection d'une utilisation frauduleuse desdites données de carte bancaire de surveillance.

2. Système, selon la revendication 1, **caractérisé en ce que** le module d'introduction prend en entrée une liste de données de carte bancaires de surveillance à insérer (ListDC), cette liste (ListDC) comprenant des enregistrements de données de cartes bancaires de surveillance, chaque enregistrement (Enrl) comprenant au moins un numéro de carte bancaire et une date d'expiration sous la forme année mois.

3. Système, selon la revendication 2, **caractérisé en ce que** chaque enregistrement (Enrl) comprend en outre un plafond de montant de transaction unitaire et un plafond global.

4. Système, selon la revendication 1, **caractérisé en ce que** ledit module d'introduction (MI) comprend des moyens de connexion, par l'intermédiaire d'une interface de connexion préalablement définie (Ipd1), à une base de données de cartes bancaires (BDc) de ladite plateforme de paiement par carte bancaires (PFP).

5. Système selon la revendication 1, **caractérisé en ce que** ledit module de surveillance (MS) comprend des moyens de connexion, par l'intermédiaire d'une interface de connexion préalablement définie (Ipd2), à au moins un serveur de transaction d'un fournisseur de service de paiement (FSP), et des moyens de contrôle (MC) d'utilisation de données bancaires, par l'intermédiaire de données obtenues à l'aide de ces moyens de connexion.

6. Système selon la revendication 5, **caractérisé en ce que** lesdits moyens de contrôle (MC) comprennent :
- des moyens de comparaison, avec lesdites données obtenues par l'intermédiaire dudit au moins un serveur de transaction d'un fournisseur de service de paiement, d'un numéro de carte bancaire de ladite base de données de suivi ; et
- des moyens de vérification d'une autorisation de paiement lorsque les moyens de comparaison fournissent un numéro enregistré dans ladite base de données de suivi.

7. Système selon la revendication 6, **caractérisé en ce que** lesdits moyens de vérification comprennent en outre des moyens d'obtention d'au moins une donnée complémentaire associé à l'utilisation desdites données bancaires.

8. Système selon la revendication 7, **caractérisé en ce que** ladite donnée complémentaire appartient au groupe comprenant :
- une adresse IP d'émission d'une transaction relative auxdites données bancaires ;
- une adresse physique correspondant à un lieu d'utilisation desdites données bancaires.

9. Procédé de traitement de données de cartes bancaires de surveillance dans un système tel que décrit en relation avec la revendication 1, **caractérisé en ce qu'**il comprend :
- une étape d'introduction (200), au sein d'une plateforme de paiement par carte bancaires (PFP), par le biais d'achat de biens ou de prestation de services sur un site e-commerce, de données de carte bancaires de surveillance, comprenant la sauvegarde, dans une base de données (BDD), dite de suivi, les données de cartes bancaires insérées dans ladite plateforme de paiement par carte bancaires (PFP) ;
- au moins une étape de suivi (300) d'activité des données de carte bancaires de surveillance introduites précédemment au sein de ladite plateforme de paiement par carte bancaires (PFP), comprenant la sauvegarde, dans ladite base de données (BDD) de suivi, au moins un enregistrement de suivi d'utilisation des données de cartes bancaires.

10. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour la mise en oeuvre d'un traitement de données de cartes bancaires de surveillance selon la revendication 1, lorsqu'il est exécuté sur un processeur.
